# EUROPÄISCHE PATENTSCHRIFT

(11) **EP 4 240 623 B1**
(45) Veröffentlichungstag und Bekanntmachung des Hinweises auf die Patenterteilung: **16.10.2024**
(21) Anmeldenummer: 21836048.5
(22) Anmeldetag: 07.12.2021
(51) Int. Cl.: B60T 8/17, B60T 17/22

(54) **LEITTECHNISCHE EINRICHTUNG**
CONTROL DEVICE
DISPOSITIF DE CONTRÔLE

(30) Priorität: 18.12.2020 DE 102020216320
(43) Veröffentlichungstag der Anmeldung: 13.09.2023
(73) Patentinhaber: Siemens Mobility GmbH, 81739 München (DE)
(72) Erfinder: HORN, Stephan, 91056 Erlangen (DE)
(74) Vertreter: Siemens Patent Attorneys
(86) Internationale Anmeldenummer: PCT/EP2021/084490
(87) Internationale Veröffentlichungsnummer: WO 2022/128599

(56) Entgegenhaltungen:
- EP-A1- 2 918 459
- CN-A- 110 239 596
- CN-A- 111 879 534
- US-A1- 2007 219 682
- US-A1- 2017 369 069

## Beschreibung

Die Erfindung bezieht sich auf eine leittechnische Einrichtung für ein Fahrzeug, insbesondere Eisenbahnschienenfahrzeug, die geeignet ist, das Fahrzeug auf der Basis zumindest einer Sollbremskurve, die eine Geschwindigkeit über dem jeweiligen Fahrzeugort beschreibt, zu bremsen.

Leittechnische Einrichtungen der beschriebenen Art werden beispielsweise bei Eisenbahnzügen eingesetzt, um das Bremsen zu steuern. Bei ETCS (European Train Control System)-kompatiblen Eisenbahnzügen werden dabei ETCS-Sollbremskurven berücksichtigt.

Aus der Druckschrift CN 111 879 534 A sind ein Leistungserkennungsverfahren und -system für das Bremssystem und die elektronische Ausrüstung eines städtischen Schienenfahrzeugs bekannt. Das Verfahren umfasst dabei die Schritte:
A: Erstellen eines Normalverhaltensmodells des Bremssystems für städtische Schienenfahrzeuge;
Bb: Anpassen des normalen Verhaltensmodells durch Übernahme eines künstlichen neuronalen Netzwerks, um ein angepasstes neuronales Netzwerkmodell zu erhalten;
C: Erstellen einer Stichprobe gemäß den Normalverhaltensdaten des im Normalzustand fahrenden Stadtschienenfahrzeugs und Trainieren des neuronalen Netzwerkmodells, um ein Normalverhaltensmodell zum Beschreiben der Bremsverzögerungsänderung des im Normalzustand fahrenden Stadtschienenfahrzeugbremssystems zu erhalten;
D: Erstellen einer Modelleingabeprobe, die jeder Bremsgriffstufe entspricht, wenn das städtische Schienenfahrzeug in einem normalen Zustand fährt, und entsprechendes Durchführen einer Berechnung, um einen erwarteten Bremsverzögerungswert zu erhalten, der jeder Bremsgriffstufe entspricht, durch das in dem Schritt C erhaltene Normalverhaltensmodell; und
E: Ermitteln des Abweichungswerts zwischen dem durchschnittlichen Bremsverzögerungswert, der jeder Bremsgriffstufe entspricht, und dem erwarteten Bremsverzögerungswert während der tatsächlichen Fahrt des städtischen Schienenfahrzeugs.

Der Erfindung liegt die Aufgabe zugrunde, eine leittechnische Einrichtung anzugeben, die universell einsetzbar ist und das Bremsen eines Fahrzeugs, insbesondere Schienenfahrzeugs, besonders gut steuern kann.

Diese Aufgabe wird erfindungsgemäß durch eine leittechnische Einrichtung mit den Merkmalen gemäß Patentanspruch 1 gelöst. Vorteilhafte Ausgestaltungen der erfindungsgemäßen leittechnischen Einrichtung sind in Unteransprüchen angegeben.

Demnach ist erfindungsgemäß vorgesehen, dass die leittechnische Einrichtung, welche eine Klassifikationseinrichtung aufweist, die nach einem erfolgten Bremsvorgang den Erfolg des Bremsvorgangs unter Bildung eines Klassifikationsergebnisses als erfolgreich oder erfolglos klassifiziert und das jeweilige Klassifikationsergebnis ausgibt, auch eine Korrektureinrichtung aufweist, die in Abhängigkeit von vorliegenden Klassifikationsergebnissen die Sollbremskurve verändern kann.

Ein wesentlicher Vorteil der erfindungsgemäßen Einrichtung ist darin zu sehen, dass die vorgesehene Klassifikation von Bremsvorgängen zum Anlass für eine Modifikation genommen werden kann, beispielsweise bei erfolglosen Bremsvorgängen oder im Falle einer zu hohen Quote an erfolgreichen Bremsvorgängen.

Alternativ kann vorgesehen sein, dass die leittechnische Einrichtung mit einer Korrektureinrichtung in Verbindung steht, die in Abhängigkeit von vorliegenden Klassifikationsergebnissen die Sollbremskurve verändern kann.

Die Korrektureinrichtung berücksichtigt im Falle eines als erfolglos klassifizierten Bremsvorgangs das Klassifikationsergebnis vorzugsweise ausschließlich dann, wenn hierfür ein fahrerseitiges Freigabesignal vorliegt.

Die leittechnische Einrichtung ist vorzugsweise geeignet, in Abhängigkeit von vorliegenden Klassifikationsergebnissen die Sollbremskurve ortsabhängig zu verändern, also nur bezüglich derjenigen Streckenabschnitte, auf die sich die Klassifikationsergebnisse beziehen.

Besonders vorteilhaft ist es, wenn die leittechnische Einrichtung zum Bremsen des Fahrzeugs zumindest zwei Sollbremskurven heranziehen kann, von denen eine nicht sicherheitskritisch ist und nachfolgend Vollbremskurve genannt wird, und eine geschwindigkeitsmäßig höherliegende, sicherheitskritische und daher unveränderliche Sollbremskurve, nachfolgend Schnellbremskurve genannt.

Die Vollbremskurve wird von der leittechnischen Einrichtung zum Bremsen des Fahrzeugs vorzugsweise herangezogen, sobald die Geschwindigkeit des Fahrzeugs die von der Vollbremskurve definierte Geschwindigkeit erreicht oder überschreitet.

Die Schnellbremskurve wird von der leittechnischen Einrichtung zum Bremsen des Fahrzeugs vorzugsweise herangezogen, sobald die Geschwindigkeit des Fahrzeugs nicht nur die von der Vollbremskurve definierte Geschwindigkeit überschreitet, sondern auch die von der Schnellbremskurve definierte Geschwindigkeit erreicht oder überschreitet.

Die Klassifikationseinrichtung klassifiziert nach einem Bremsvorgang den Bremsvorgang vorzugsweise als erfolglos, wenn zunächst die Vollbremskurve und danach die Schnellbremskurve herangezogen wurde.

Vorteilhaft ist es, wenn die Korrektureinrichtung nach einem Bremsen unter Heranziehung der Schnellbremskurve die Vollbremskurve geschwindigkeitsmäßig absenkt.

Ist die Vollbremskurve unter Heranziehung einer angenommenen Bremsverzögerung berechnet worden, so ist es vorteilhaft, wenn die Korrektureinrichtung nach einem Bremsen unter Heranziehung der Schnellbremskurve die Vollbremskurve geschwindigkeitsmäßig absenkt, indem sie die Vollbremskurve unter Heranziehung einer Bremsverzögerung, die kleiner als die zuvor angenommene Bremsverzögerung ist, neu berechnet.

Auch ist es vorteilhaft, wenn die Korrektureinrichtung die Vollbremskurve geschwindigkeitsmäßig anhebt, wenn eine vorgegebene Quote an erfolgreichen Vollbremsvorgängen registriert wurde. Eine zu hohe Quote an erfolgreichen Vollbremsvorgängen ist ein Indiz dafür, dass diese auf der Basis eines zu kleinen Bremsvermögens ermittelt wurde.

Die Korrektureinrichtung hebt eine geschwindigkeitsmäßig unter der Vollbremskurve liegende Warnkurve und/oder eine geschwindigkeitsmäßig unter der Vollbremskurve liegende Maximalgeschwindigkeitskurve vorzugsweise an, wenn die Vollbremskurve angehoben wird, und senkt sie ab, wenn die Vollbremskurve abgesenkt wird.

Die Vollbremskurve zieht vorzugsweise generatorische Bremskraft, die von einer Netzeinspeisung elektrischer Energie in ein streckenseitiges Netz abhängig ist, ein.

Die Schnellbremskurve basiert vorzugsweise ausschließlich auf Bremseinrichtungen, die von einer Netzeinspeisung von elektrischer Energie in ein streckenseitiges Netz unabhängig sind.

Auch ist es von Vorteil, wenn die oder zumindest eine der Sollbremskurven eine verschleißoptimierte Sollbremskurve ist und die Klassifikationseinrichtung nach einem Bremsvorgang gemäß der verschleißoptimierten Sollbremskurve den Bremsvorgang als erfolglos klassifiziert, wenn beim Bremsen verschleißbehaftete Bremsen eingesetzt wurden.

Die Korrektureinrichtung senkt die verschleißoptimierte Sollbremskurve vorzugsweise geschwindigkeitsmäßig ab, wenn ein Bremsvorgang auf deren Basis als erfolglos klassifiziert wurde.

Darüber hinaus wird es als vorteilhaft angesehen, wenn die leittechnische Einrichtung, die zumindest eine Sollbremskurve aus einer zentralen Datenbank entnimmt, auf die leittechnische Einrichtungen einer Vielzahl baugleicher Fahrzeuge zugreifen können, und die Korrektureinrichtung - in Abhängigkeit von vorliegenden Klassifikationsergebnissen der Vielzahl an baugleichen Fahrzeugen - die Sollbremskurve in der zentralen Datenbank mit Wirkung für alle Fahrzeuge verändert.

Die Sollbremskurven sind vorzugsweise ETCS-kompatible Sollbremskurven.

Die Erfindung bezieht sich darüber hinaus auf ein Fahrzeug, insbesondere Schienenfahrzeug. Erfindungsgemäß ist vorgesehen, dass dieses mit einer leittechnischen Einrichtung ausgestattet ist, wie sie oben beschrieben worden ist.

Bezüglich der Vorteile des erfindungsgemäßen Fahrzeugs und dessen vorteilhafter Ausgestaltungen sei auf die obigen Ausführungen im Zusammenhang mit der erfindungsgemäßen Einrichtung und deren vorteilhafter Ausgestaltungen verwiesen.

Die Erfindung bezieht sich darüber hinaus auf ein Verfahren zum Betreiben eines Fahrzeugs, insbesondere Eisenbahnschienenfahrzeugs, nach Anspruch 13.

Bezüglich der Vorteile des erfindungsgemäßen Verfahrens und dessen vorteilhafter Ausgestaltungen sei auf die obigen Ausführungen im Zusammenhang mit der erfindungsgemäßen Einrichtung und deren vorteilhafter Ausgestaltungen verwiesen.

Die Sollbremskurve wird vorzugsweise mit einer Korrektureinrichtung in Abhängigkeit von vorliegenden Klassifikationsergebnissen verändert.

Die Erfindung wird nachfolgend anhand von Ausführungsbeispielen näher erläutert; dabei zeigen beispielhaft
- Figur 1: ein Ausführungsbeispiel für ein Schienenfahrzeug, das mit einer leittechnischen Einrichtung ausgestattet ist,
- Figur 2: ein Ausführungsbeispiel für einen Kurvendatensatz, der in einem Speicher des Schienenfahrzeugs gemäß Figur 1 abgespeichert ist,
- Figur 3: den Kurvendatensatz gemäß Figur 2 nach einer Absenkung,
- Figur 4: den Kurvendatensatz gemäß Figur 2 nach einer Anhebung,
- Figur 5: ein Ausführungsbeispiel für ein Schienenfahrzeug, bei dem zusätzlich ein fahrerseitiges Freigabesignal berücksichtigt wird, und
- Figur 6: ein Ausführungsbeispiel für ein Schienenfahrzeug ohne eigene Korrektureinrichtung.

In den Figuren werden der Übersicht halber für identische oder vergleichbare Komponenten stets dieselben Bezugszeichen verwendet.

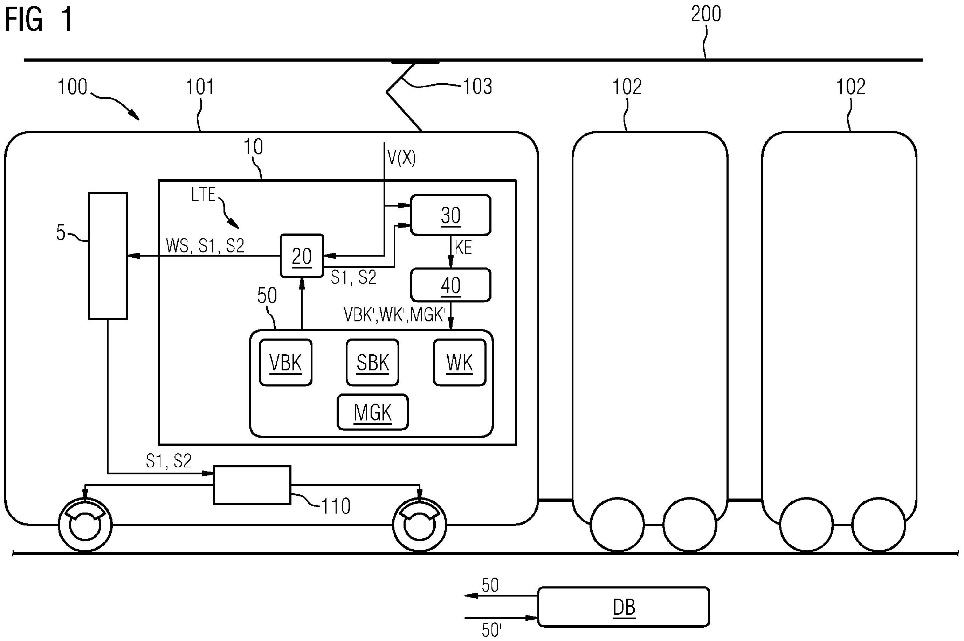

Die Figur 1 zeigt eine Recheneinrichtung 5, die mit einem Speicher 10 zusammenarbeitet. In dem Speicher 10 sind Softwaremodule abgespeichert, die bei Ausführung durch die Recheneinrichtung 5 dazu führen, dass die Recheneinrichtung 5 gemeinsam mit dem Speicher 10 eine leittechnische Einrichtung LTE bildet.

Die leittechnische Einrichtung LTE kann das Bremsen eines Fahrzeugs, in dem die leittechnische Einrichtung LTE integriert ist und bei dem es sich beispielsweise um ein ein- oder mehrgliedriges Fahrzeug in Form eines Eisenbahnzuges 100 handeln kann, mittels eines Bremssteuersignals S1 bzw. S2 für eine in der Figur 1 nur im Triebfahrzeug 101 des Eisenbahnzuges 100 angedeutete Bremseinrichtung 110 steuern. Selbstverständlich können mittels des Bremssteuersignals S1 bzw. S2 auch Bremseinrichtungen in den Waggons 102 des Eisenbahnzuges 100 gesteuert werden.

Das Triebfahrzeug 101 des Eisenbahnzuges 100 ist über einen Stromabnehmer 103 an ein streckenseitiges Energieversorgungsnetz 200 angeschlossen.

Bei dem Ausführungsbeispiel gemäß Figur 1 sind in dem Speicher 10 ein Überwachungsmodul, das bei Ausführung durch die Recheneinrichtung 5 eine Überwachungseinrichtung 20 bildet, ein Klassifikationsmodul, das bei Ausführung durch die Recheneinrichtung 5 eine Klassifikationseinrichtung 30 bildet, und ein Korrekturmodul, das bei Ausführung durch die Recheneinrichtung 5 eine Korrektureinrichtung 40 bildet, abgespeichert.

Außerdem ist in einem Speicherbereich des Speichers 10 ein Kurvendatensatz 50 abgespeichert, der definiert:
- eine sicherheitsunkritische Vollbremskurve VBK,
- eine geschwindigkeitsmäßig über der Vollbremskurve VBK liegende, sicherheitskritische und daher unveränderliche Schnellbremskurve SBK,
- eine geschwindigkeitsmäßig unter der Vollbremskurve VBK liegende Warnkurve WK und
- eine geschwindigkeitsmäßig unter der Warnkurve WK liegende Maximalgeschwindigkeitskurve MGK.

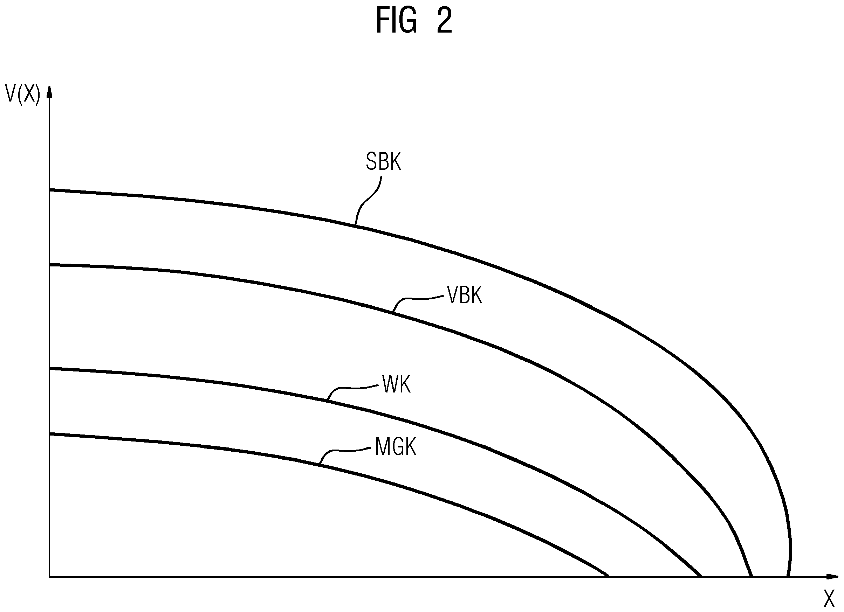

Ein Ausführungsbeispiel für einen Kurvendatensatz 50 ist in der Figur 2 in Form von Kurven der Geschwindigkeit V über dem jeweiligen Ort X dargestellt.

Die Vollbremskurve VBK ist vorzugsweise eine verschleißoptimierte Sollbremskurve, die generatorische Bremskraft, die von der Möglichkeit einer Netzeinspeisung von elektrischer Energie in das streckenseitige Energieversorgungsnetz 200 abhängig ist, einbezieht. Wegen der Berücksichtigung der netzabhängigen generatorischen Bremskraft ist die Vollbremskurve VBK also insgesamt von ihrer Bremswirkung her netzabhängig; denn ohne eine Energieaufnahme seitens des Netzes kann keine Bremskraft oder zumindest nicht die erwartete Bremskraft erzeugt werden. Die Vollbremskurve VBK ist somit wegen des Einbezugs generatorischer Bremskraft zwar verschleißoptimiert, aber nicht absolut "sicher".

Die Schnellbremskurve SBK basiert mit Blick auf ein sicheres Bremsen ausschließlich auf Bremsen, die von einer Netzeinspeisung von elektrischer Energie in das streckenseitige Energieversorgungsnetz 200 unabhängig sind, beispielsweise auf Reibungsbremsen.

Der Kurvendatensatz 50 wird vorzugsweise aus einer zentralen Datenbank DB entnommen bzw. ausgelesen, auf die leittechnische Einrichtungen LTE einer Vielzahl an baugleichen Fahrzeugen zugreifen können. Der Kurvendatensatz 50 ist also vorzugsweise kein fahrzeugindividueller Kurvendatensatz, sondern ein fahrzeugtypbezogener Kurvendatensatz, der sich auf eine Vielzahl baugleicher Fahrzeuge bezieht. Die Übertragung des Kurvendatensatzes 50 aus der zentralen Datenbank DB kann über Funk oder drahtgebunden erfolgen, beispielsweise im Rahmen der Wartung des Schienenfahrzeugs 100.

Die Überwachungseinrichtung 20 überwacht die jeweilige Geschwindigkeit V des Schienenfahrzeugs 100 während seiner Fahrt auf einem von dem Kurvendatensatz 50 beschriebenen Streckenabschnitt. Solange die jeweilige Geschwindigkeit V die durch die Maximalgeschwindigkeitskurve MGK beschriebene Maximalgeschwindigkeit nicht oder zumindest nicht substanziell überschreitet, greift die Überwachungseinrichtung 20 nicht in das Fahrgeschehen ein. Der Schienenfahrzeugführer fährt vorgabegemäß.

Erreicht oder überschreitet die Geschwindigkeit V eine durch die Warnkurve WK definierte Warngeschwindigkeit, so erzeugt die Überwachungseinrichtung 20 ein optisches und/oder akustisches Warnsignal WS, um dem Schienenfahrzeugführer zu signalisieren, dass er zu schnell fährt.

Erreicht oder überschreitet die Geschwindigkeit V nicht nur die durch die Warnkurve WK definierte Warngeschwindigkeit, sondern auch eine durch die Vollbremskurve VBK definierte Auslösegeschwindigkeit, so erzeugt die Überwachungseinrichtung 20 als Bremssteuersignal ein Auslösesignal S1, mit dem ein Bremsen des Schienenfahrzeugs 100 auf der Basis der Vollbremskurve VBK erzwungen wird, unabhängig von dem jeweiligen Steuerverhalten des Schienenfahrzeugführers.

Ist die in dem Kurvendatensatz 50 gespeicherte Vollbremskurve VBK auf der Basis zutreffender Annahmen berechnet worden und besteht seitens des streckenseitigen Energieversorgungsnetzes 200 eine ausreichende Energieaufnahmebereitschaft, so wird bei einem Bremsen gemäß der Vollbremskurve VBK der weitere Geschwindigkeitsverlauf dem Sollverlauf gemäß der Vollbremskurve VBK entsprechen.

Ist die in dem Kurvendatensatz 50 gespeicherte Vollbremskurve VBK jedoch beispielsweise auf der Basis einer Bremsverzögerung berechnet worden, die das Schienenfahrzeug mit den herangezogenen bzw. aktivierten Bremsen nicht erreicht, beispielsweise, weil seitens des streckenseitigen Energieversorgungsnetzes 200 keine ausreichende Energieaufnahmebereitschaft bestand, so wird die tatsächliche Geschwindigkeit des Schienenfahrzeugs 100 die durch die Vollbremskurve VBK definierte Geschwindigkeit überschreiten. Ist diese Überschreitung so groß, dass sie sicherheitskritisch wird, und wird die Schnellbremskurve SBK im Diagramm gemäß Figur 2 geschnitten, so wird die Überwachungseinrichtung 20 als Bremssteuersignal ein zweites Auslösesignal S2 erzeugen, mit dem sie ein Bremsen des Schienenfahrzeugs 100 auf der Basis der Schnellbremskurve SBK erzwingt.

Nach einer Aktivierung des Bremsvorgangs auf der Basis der Schnellbremskurve SBK wird die Klassifikationseinrichtung 30 den Bremsvorgang insgesamt als erfolglos klassifizieren, weil das Aktivieren der Schnellbremskurve SBK zeigt, dass die Vollbremskurve VBK auf unzutreffenden Annahmen basiert. Das entsprechende Klassifikationsergebnis KE wird zu der Korrektureinrichtung 40 übertragen.

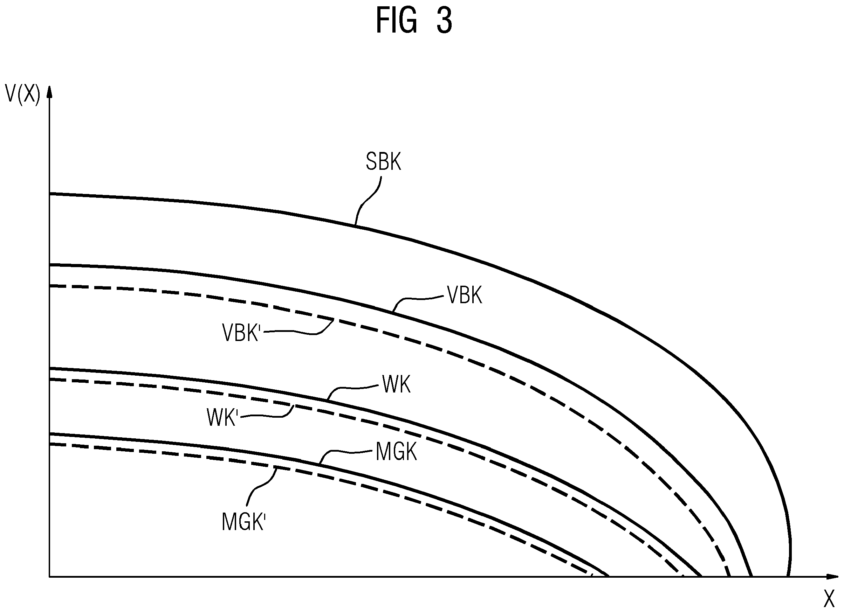

Bei Vorliegen eines Klassifikationsergebnisses KE, das ein erfolgloses Bremsen im Vollbremsmodus anzeigt, wird die Korrektureinrichtung 40 die Vollbremskurve VBK geschwindigkeitsmäßig absenken und dadurch eine neue Vollbremskurve VBK' bilden, wie beispielhaft in der Figur 3 dargestellt ist. Die Schnellbremskurve SBK bleibt unverändert.

Außerdem wird die Korrektureinrichtung 40 vorzugsweise auch die Warnkurve WK und die Maximalgeschwindigkeitskurve MGK reduzieren unter Bildung einer neuen Warnkurve WK' und einer neuen Maximalgeschwindigkeitskurve MGK'.

Falls die Vollbremskurve VBK unter Heranziehung einer angenommenen oder geschätzten Bremsverzögerung berechnet worden ist, so ist es vorteilhaft, wenn die Korrektureinrichtung 40 die Vollbremskurve VBK unter Heranziehung einer reduzierten Bremsverzögerung, also einer Bremsverzögerung, die kleiner als die bei der vorherigen Berechnung angenommene Bremsverzögerung ist, neu berechnet.

Im Übrigen kann die Klassifikationseinrichtung 30 einen Bremsvorgang gemäß der Vollbremskurve VBK auch dann als erfolglos einstufen, wenn es zu keiner Aktivierung der Schnellbremskurve SBK gekommen ist. Handelt es sich bei der Vollbremskurve VBK beispielsweise um eine verschleißoptimierte Bremskurve, bei der keine verschleißbehafteten Bremsen zum Einsatz kommen sollen, so kann die Klassifikationseinrichtung 30 nach dem Bremsvorgang den Bremsvorgang auch dann als erfolglos klassifizieren, wenn beim Bremsen verschleißbehaftete Bremsen eingesetzt werden mussten, um den gewünschten Bremsverlauf tatsächlich zu erreichen.

Bei dem letztgenannten Szenario und bei Vorliegen eines entsprechenden Klassifikationsergebnisses KE seitens der Klassifikationseinrichtung 30 wird die Korrektureinrichtung 40 die Vollbremskurve VBK nachfolgend geschwindigkeitsmäßig absenken, beispielsweise durch Neuberechnung der Vollbremskurve VBK unter Heranziehung einer reduzierten Bremsverzögerung, wie dies oben erläutert worden ist.

Darüber hinaus kann in vorteilhafter Weise vorgesehen sein, dass die Korrektureinrichtung 40 die Vollbremskurve VBK geschwindigkeitsmäßig anhebt, wenn eine vorgegebene Quote an erfolgreichen Vollbremsvorgängen registriert wurde. Wird die Quote erfüllt, so kann nämlich davon ausgegangen werden, dass die Vollbremskurve VBK unter Heranziehung einer zu kleinen Bremsverzögerung berechnet worden ist. In diesem Falle wird die Korrektureinrichtung 40 die Vollbremskurve VBK unter Heranziehung einer erhöhten Bremsverzögerung, also einer Bremsverzögerung, die größer als die bei der vorherigen Berechnung angenommene Bremsverzögerung ist, neu berechnen, um dem Schienenfahrzeugführer mehr Spielraum beim Fahren zu geben und ein zu frühes Zwangsbremsen zu vermeiden.

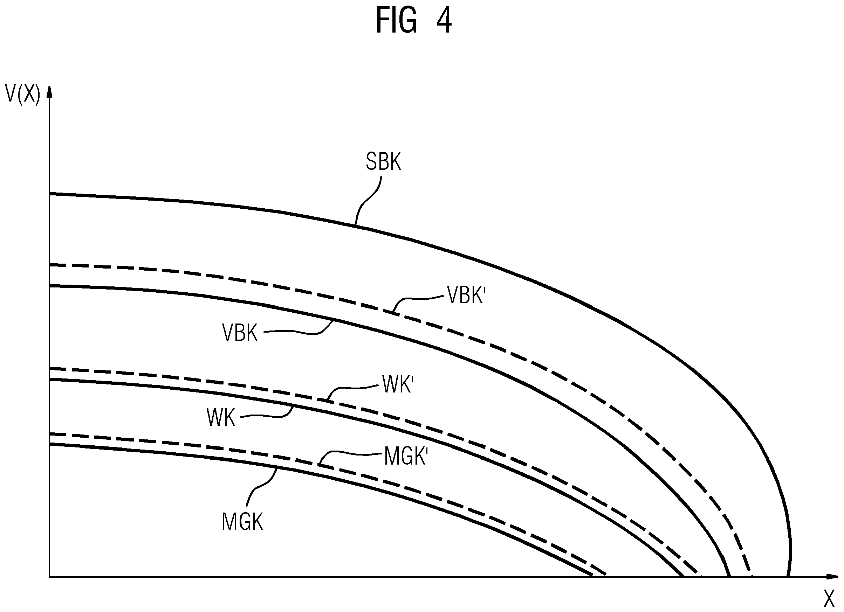

Außerdem wird die Korrektureinrichtung 40 vorzugsweise auch die Warnkurve WK und die Maximalgeschwindigkeitskurve MGK erhöhen, wenn die Vollbremskurve VBK angehoben wird, unter Bildung einer neuen Warnkurve WK' und einer neuen Maximalgeschwindigkeitskurve MGK', wie beispielhaft in der Figur 4 gezeigt ist.

Wenn der Kurvendatensatz 50 von der Korrektureinrichtung 40 verändert wird, sei es durch Anheben oder Absenken von Sollbremskurven, wie es beispielhaft in den Figuren 3 und 4 gezeigt ist, so wird die Korrektureinrichtung 40 vorzugsweise auch ein entsprechendes Update in der zentralen Datenbank DB auslösen, beispielsweise durch Übermitteln des veränderten Kurvendatensatzes 50`. Durch diese Maßnahme wird die "flottenbezogene Steuerintelligenz", die sich in dem veränderten Kurvendatensatz 50` wiederspiegelt, erhöht.

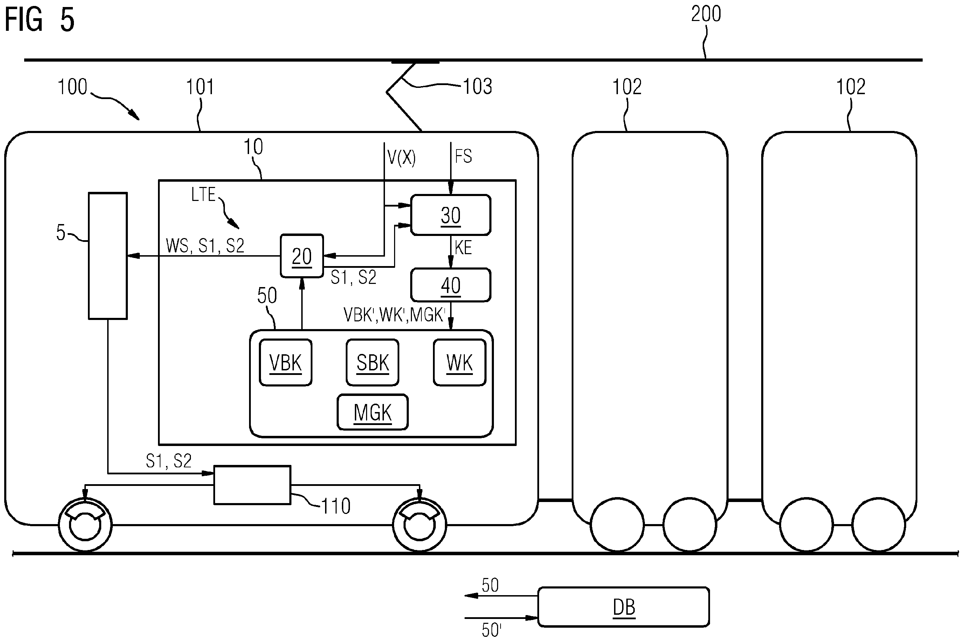

Die Figur 5 zeigt eine Ausführungsvariante des Ausführungsbeispiels gemäß Figur 1. Bei dem Ausführungsbeispiel wird ein erfolgloser Bremsvorgang nur dann berücksichtigt bzw. zum Anlass für Änderungen herangezogen, wenn hierfür ein fahrerseitiges Freigabesignal FS vorliegt. Liegt dieses nicht vor, so erfolgt keine Modifikation des Kurvendatensatzes 50 durch die Korrektureinrichtung 40.

Durch das Abhängigmachen einer Modifikation von der fahrerseitigen Freigabe lässt sich vermeiden, dass eine Modifikation des Kurvendatensatz 50 erfolgt, wenn die Erfolglosigkeit des Bremsvorgangs für den Schienenfahrzeugführer erkennbar nicht auf den Kurvendatensatz 50 zurückzuführen ist, sondern auf andere Umstände, wie beispielsweise extremes Wetter oder eine erkennbar andere Beladung des Schienenfahrzeugs 100 als üblich.

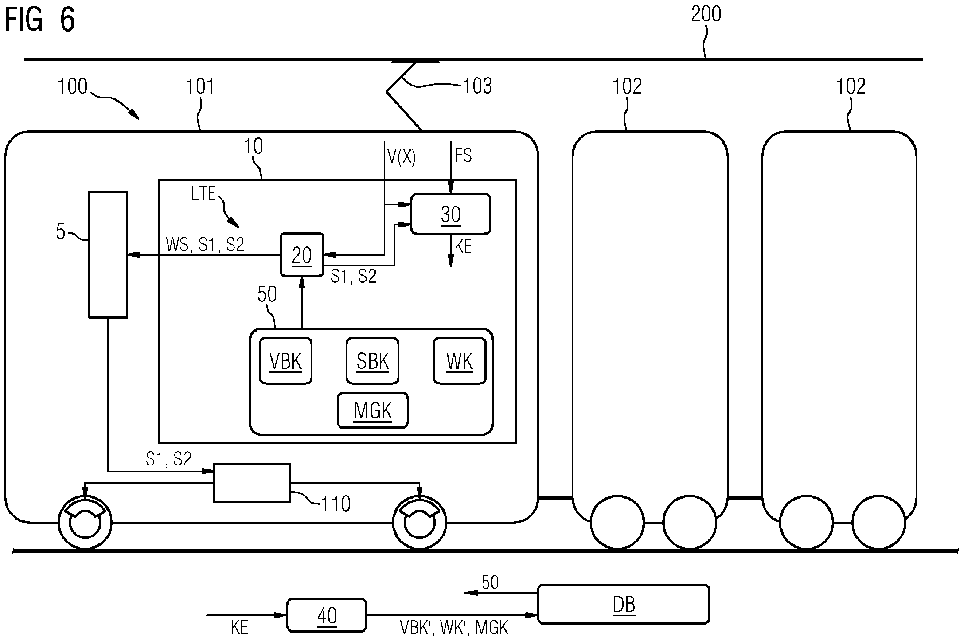

Bei den Ausführungsbeispielen gemäß den Figuren 1 und 5 ist die Korrektureinrichtung 40 in dem Schienenfahrzeug 100 integriert. Alternativ kann sie auch in der zentralen Datenbank DB integriert oder dieser extern vorgeordnet sein, wie beispielhaft die Figur 6 zeigt.

Bei dem Ausführungsbeispiel gemäß Figur 6 überträgt die fahrzeugeigene Klassifikationseinrichtung 30 ihr Klassifikationsergebnis KE an die externe Korrektureinrichtung 40, die wiederum mit der zentralen Datenbank DB verbunden ist.

Die obigen Ausführungen beziehen sich beispielhaft auf fahrzeugführerseitig gesteuerte Schienenfahrzeuge; selbstverständlich können die beschriebenen Einrichtungen und Verfahren alternativ auch bei autonom fahrenden Schienenfahrzeugen eingesetzt werden.

Die obigen Ausführungen beziehen sich beispielhaft auf Schienenfahrzeuge, selbstverständlich können die beschriebenen Einrichtungen und Verfahren alternativ auch bei anderen Arten an Fahrzeugen wie zum Beispiel Straßenfahrzeugen eingesetzt werden, unabhängig davon, ob diese fahrzeugführerseitig gesteuert sind oder autonom fahren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 5: Recheneinrichtung
- 10: Speicher
- 20: Überwachungseinrichtung
- 30: Klassifikationseinrichtung
- 40: Korrektureinrichtung
- 50: Kurvendatensatz
- 50`: veränderter Kurvendatensatz
- 100: Eisenbahnzug
- 101: Triebfahrzeug
- 102: Waggon
- 103: Stromabnehmer
- 110: Bremseinrichtung
- 200: Energieversorgungsnetz

- DB: Datenbank
- FS: Freigabesignal
- KE: Klassifikationsergebnis
- LTE: leittechnische Einrichtung
- MGK: Maximalgeschwindigkeitskurve
- MGK': neue Maximalgeschwindigkeitskurve
- S1: Bremssteuersignal
- S2: Bremssteuersignal
- SBK: Schnellbremskurve
- V: Geschwindigkeit
- VBK: Vollbremskurve
- VBK': neue Vollbremskurve
- WK: Warnkurve
- WK': neue Warnkurve
- WS: Warnsignal
- X: Ort

## Patentansprüche

1. Leittechnische Einrichtung (LTE) für ein Fahrzeug, insbesondere Eisenbahnschienenfahrzeug (100), die geeignet ist, das Fahrzeug auf der Basis zumindest einer Sollbremskurve, die eine Geschwindigkeit (V) über dem jeweiligen Fahrzeugort beschreibt, zu bremsen,
wobei die leittechnische Einrichtung (LTE) eine Klassifikationseinrichtung (30) aufweist, die nach einem erfolgten Bremsvorgang den Erfolg des Bremsvorgangs unter Bildung eines Klassifikationsergebnisses (KE) als erfolgreich oder erfolglos klassifiziert und das jeweilige Klassifikationsergebnis (KE) ausgibt,
**dadurch gekennzeichnet, dass** die leittechnische Einrichtung (LTE) eine Korrektureinrichtung (40) aufweist, die in Abhängigkeit von vorliegenden Klassifikationsergebnissen (KE) die Sollbremskurve verändern kann.

2. Leittechnische Einrichtung (LTE) nach Anspruch 1,
**dadurch gekennzeichnet, dass** die Korrektureinrichtung (40) im Falle eines als erfolglos klassifizierten Bremsvorgangs das Klassifikationsergebnis (KE) ausschließlich dann berücksichtigt, wenn hierfür ein fahrerseitiges Freigabesignal (FS) vorliegt.

3. Leittechnische Einrichtung (LTE) nach einem der voranstehenden Ansprüche,
**dadurch gekennzeichnet, dass** die leittechnische Einrichtung (LTE) in Abhängigkeit von vorliegenden Klassifikationsergebnissen (KE) die Sollbremskurve ortsabhängig verändern kann, also nur bezüglich derjenigen Streckenabschnitte, auf die sich die Klassifikationsergebnisse (KE) beziehen.

4. Leittechnische Einrichtung (LTE) nach einem der voranstehenden Ansprüche,
**dadurch gekennzeichnet, dass**
- die leittechnische Einrichtung (LTE) zum Bremsen des Fahrzeugs zumindest zwei Sollbremskurven heranziehen kann, von denen eine nicht sicherheitskritisch ist und nachfolgend Vollbremskurve (VBK) genannt wird, und eine geschwindigkeitsmäßig höherliegende, sicherheitskritische und daher unveränderliche Sollbremskurve, nachfolgend Schnellbremskurve (SBK) genannt,
- die Vollbremskurve (VBK) von der leittechnischen Einrichtung (LTE) zum Bremsen des Fahrzeugs herangezogen wird, sobald die Geschwindigkeit (V) des Fahrzeugs die von der Vollbremskurve (VBK) definierte Geschwindigkeit (V) erreicht oder überschreitet,
- die Schnellbremskurve (SBK) von der leittechnischen Einrichtung (LTE) zum Bremsen des Fahrzeugs herangezogen wird, sobald die Geschwindigkeit (V) des Fahrzeugs nicht nur die von der Vollbremskurve (VBK) definierte Geschwindigkeit (V) überschreitet, sondern auch die von der Schnellbremskurve (SBK) definierte Geschwindigkeit (V) erreicht oder überschreitet, und
- die Klassifikationseinrichtung (30) nach einem Bremsvorgang den Bremsvorgang als erfolglos klassifiziert, wenn zunächst die Vollbremskurve (VBK) und danach die Schnellbremskurve (SBK) herangezogen wurde.

5. Leittechnische Einrichtung (LTE) nach Anspruch 4,
**dadurch gekennzeichnet, dass**
- die Vollbremskurve (VBK) unter Heranziehung einer angenommenen Bremsverzögerung berechnet worden ist, und
- die Korrektureinrichtung (40) nach einem Bremsen unter Heranziehung der Schnellbremskurve (SBK) die Vollbremskurve (VBK) geschwindigkeitsmäßig absenkt, indem sie die Vollbremskurve (VBK) unter Heranziehung einer Bremsverzögerung, die kleiner als die zuvor angenommene Bremsverzögerung ist, neu berechnet.

6. Leittechnische Einrichtung (LTE) nach einem der Ansprüche 4 und 5,
**dadurch gekennzeichnet, dass** die Korrektureinrichtung (40) die Vollbremskurve (VBK) geschwindigkeitsmäßig anhebt, wenn eine vorgegebene Quote an erfolgreichen Vollbremsvorgängen registriert wurde.

7. Leittechnische Einrichtung (LTE) nach einem der Ansprüche 4 bis 6,
**dadurch gekennzeichnet, dass** die Korrektureinrichtung (40) eine geschwindigkeitsmäßig unter der Vollbremskurve (VBK) liegende Warnkurve (WK) und/oder eine geschwindigkeitsmäßig unter der Vollbremskurve (VBK) liegende Maximalgeschwindigkeitskurve (MGK) anhebt, wenn die Vollbremskurve (VBK) angehoben wird, und absenkt, wenn die Vollbremskurve (VBK) abgesenkt wird.

8. Leittechnische Einrichtung (LTE) nach einem der Ansprüche 4 bis 7,
**dadurch gekennzeichnet, dass**
- die Vollbremskurve (VBK) generatorische Bremskraft, die von einer Netzeinspeisung elektrischer Energie in ein streckenseitiges Netz (200) abhängig ist, einbezieht und
- die Schnellbremskurve (SBK) ausschließlich auf Bremseinrichtungen basiert, die von einer Netzeinspeisung von elektrischer Energie in das streckenseitige Netz (200) unabhängig sind.

9. Leittechnische Einrichtung (LTE) nach einem der Ansprüche 4 bis 8,
**dadurch gekennzeichnet, dass**
- die oder zumindest eine der Sollbremskurven, insbesondere die Vollbremskurve (VBK), eine verschleißoptimierte Sollbremskurve ist und
- die Klassifikationseinrichtung (30) nach einem Bremsvorgang gemäß der verschleißoptimierten Sollbremskurve den Bremsvorgang als erfolglos klassifiziert, wenn beim Bremsen verschleißbehaftete Bremsen eingesetzt wurden.

10. Leittechnische Einrichtung (LTE) nach Anspruch 9,
**dadurch gekennzeichnet, dass** die Korrektureinrichtung (40) die verschleißoptimierte Sollbremskurve geschwindigkeitsmäßig absenkt, wenn ein Bremsvorgang auf deren Basis als erfolglos klassifiziert wurde.

11. Leittechnische Einrichtung (LTE) nach einem der voranstehenden Ansprüche,
**dadurch gekennzeichnet, dass**
- die leittechnische Einrichtung (LTE) die zumindest eine Sollbremskurve aus einer zentralen Datenbank (DB) entnimmt, auf die leittechnische Einrichtungen (LTE) einer Vielzahl baugleicher Fahrzeuge zugreifen können, und
- die Korrektureinrichtung (40) - in Abhängigkeit von vorliegenden Klassifikationsergebnissen (KE) der Vielzahl an baugleichen Fahrzeugen - die Sollbremskurve in der zentralen Datenbank (DB) mit Wirkung für alle Fahrzeuge verändert.

12. Leittechnische Einrichtung (LTE) nach einem der voranstehenden Ansprüche,
**dadurch gekennzeichnet, dass** die Sollbremskurven ETCS-kompatible ETCS-Sollbremskurven sind.

13. Verfahren zum Betreiben eines Fahrzeugs, insbesondere Eisenbahnschienenfahrzeugs (100), wobei das Fahrzeug auf der Basis zumindest einer Sollbremskurve, die eine Geschwindigkeit (V) über dem jeweiligen Fahrzeugort beschreibt, gebremst wird und
wobei nach einem erfolgten Bremsvorgang der Erfolg des Bremsvorgangs unter Bildung eines Klassifikationsergebnisses (KE) als erfolgreich oder erfolglos klassifiziert und das jeweilige Klassifikationsergebnis (KE) ausgegeben wird,
**dadurch gekennzeichnet, dass** die Sollbremskurve mit einer Korrektureinrichtung (40) in Abhängigkeit von vorliegenden Klassifikationsergebnissen (KE) verändert wird.

14. Verbund aus einer leittechnischen Einrichtung (LTE) für ein Fahrzeug, insbesondere Eisenbahnschienenfahrzeug (100), und einer Korrektureinrichtung (40),
wobei die leittechnische Einrichtung (LTE) geeignet ist, das Fahrzeug auf der Basis zumindest einer Sollbremskurve, die eine Geschwindigkeit (V) über dem jeweiligen Fahrzeugort beschreibt, zu bremsen,
wobei die leittechnische Einrichtung (LTE) eine Klassifikationseinrichtung (30) aufweist, die nach einem erfolgten Bremsvorgang den Erfolg des Bremsvorgangs unter Bildung eines Klassifikationsergebnisses (KE) als erfolgreich oder erfolglos klassifiziert und das jeweilige Klassifikationsergebnis (KE) ausgibt und
wobei die Korrektureinrichtung (40), welche mit der Klassifikationseinrichtung (30) in Verbindung steht, in Abhängigkeit von vorliegenden Klassifikationsergebnissen (KE) die Sollbremskurve verändern kann.

## Claims

1. Control device (LTE) for a vehicle, in particular railway vehicle (100), which is suitable for braking the vehicle on the basis of at least one target brake curve which describes a speed (V) over the respective vehicle location,
wherein the control device (LTE) has a classification device (30) which, after a completed braking process, classifies the success of the braking process as successful or unsuccessful by forming a classification result (KE) and outputs the respective classification result (KE),
**characterised in that**
the control device (LTE) has a correction device (40) which can change the target brake curve as a function of the available classification results (KE).

2. Control device (LTE) according to claim 1,
**characterised in that**
in the event that a braking process is classified as unsuccessful, the correction device (40) only takes into account the classification result (KE) if a driver's release signal (FS) is available for this purpose.

3. Control device (LTE) according to one of the preceding claims,
**characterised in that**
the control device (LTE) can change the target brake curve in a location-dependent manner as a function of the available classification results (KE), in other words only with respect to those sections of track to which the classification results (KE) relate.

4. Control device (LTE) according to one of the preceding claims,
**characterised in that**
- the control device (LTE) can use at least two target brake curves to brake the vehicle, one of which is not safety-critical and is hereinafter referred to as the full brake curve (VBK), and a higher-speed, safety-critical and therefore unchangeable target brake curve, hereinafter referred to as the emergency brake curve (SBK),
- the full brake curve (VBK) is used by the control device (LTE) to brake the vehicle as soon as the speed (V) of the vehicle reaches or exceeds the speed (V) defined by the full brake curve (VBK),
- the emergency brake curve (SBK) is used by the control device (LTE) to brake the vehicle as soon as the speed (V) of the vehicle not only exceeds the speed (V) defined by the full brake curve (VBK), but also reaches or exceeds the speed (V) defined by the emergency brake curve (SBK), and
- the classification device (30) classifies the braking process as unsuccessful after a braking process if the full brake curve (VBK) and then the emergency brake curve (SBK) have been used in succession.

5. Control device (LTE) according to claim 4,
**characterised in that**
- the full brake curve (VBK) has been calculated using an assumed braking deceleration, and
- after braking using the emergency brake curve (SBK) the correction device (40) lowers the speed of the full brake curve (VBK) by recalculating the full brake curve (VBK) using a braking deceleration that is less than the braking deceleration assumed previously.

6. Control device (LTE) according to one of claims 4 and 5, **characterised in that**
the correction device (40) raises the speed of the full brake curve (VBK) if a predetermined rate of successful full brake processes has been registered.

7. Control device (LTE) according to one of claims 4 to 6, **characterised in that**
the correction device (40) raises a warning curve (WK) which is below the full brake curve (VBK) in terms of speed and/or a maximum speed curve (MGK) that is below the full brake curve (VBK) in terms of speed when the full brake curve (VBK) is raised and lowers the same when the full brake curve (VBK) is lowered.

8. Control device (LTE) according to one of claims 4 to 7, **characterised in that**
- the full brake curve (VBK) includes regenerative braking force, which is dependent on a feeding-in of electrical energy into a trackside network (200), and
- the emergency brake curve (SBK) is based exclusively on braking devices, which are independent of a feeding-in of electrical energy into the trackside network (200).

9. Control device (LTE) according to one of claims 4 to 8, **characterised in that**
- the or at least one of the target brake curves, in particular the full brake curve (VBK), is a wear-optimised target brake curve, and
- after a braking process according to the wear-optimised target brake curve, the classification device (30) classifies the braking process as unsuccessful if worn brakes have been used during braking.

10. Control device (LTE) according to claim 9,
**characterised in that**
the correction device (40) lowers the wear-optimised target brake curve in terms of speed if a braking process has been classified as unsuccessful on the basis hereof.

11. Control device (LTE) according to one of the preceding claims,
**characterised in that**
- the control device (LTE), which takes the at least one target brake curve from a central database (DB), can access the control devices (LTE) of a large number of identical vehicles, and
- the correction device (40) - as a function of the available classification results (KE) of the large number of identical vehicles - changes the target brake curve in the central database (DB) with effect for all vehicles.

12. Control device (LTE) according to one of the preceding claims,
**characterised in that**
the target brake curves are ETCS-compatible ETCS target brake curves.

13. Method for operating a vehicle, in particular railway vehicle (100), wherein the vehicle is braked on the basis of at least one target brake curve which describes a speed (V) over the respective vehicle location and,
wherein after a completed braking process, the success of the braking process is classified as successful or unsuccessful by forming a classification result (KE) and the respective classification result (KE) is output, **characterised in that** the target brake curve is changed with a correction device (40) as a function of available classification results (KE).

14. Combination of a control device (LTE) for a vehicle, in particular a railway vehicle (100), and a correction device (40) ,
wherein the control device (LTE) is suitable for braking the vehicle on the basis of at least one target brake curve which describes a speed (V) over the respective vehicle location, wherein the control device (LTE) has a classification device (30) which, after a completed braking process, classifies the success of the braking process as successful or unsuccessful by forming a classification result (KE) and outputs the respective classification result (KE) and
wherein the correction device (40) which is connected to the classification device (30) can change the target brake curve as a function of the available classification results (KE).

## Revendications

1. Dispositif (LTE) de la technique de conduite pour un véhicule, en particulier pour un véhicule (100) de chemin de fer, qui est propre à freiner le véhicule sur la base d'au moins une courbe de freinage de consigne, qui décrit une vitesse (V) à l'emplacement respectif du véhicule,
dans lequel le dispositif (LTE) de la technique de conduite a un dispositif (30) de classification, qui, après une opération de freinage effectuée, classe l'opération de freinage en formant un résultat (KE) de classification comme couronnée de succès ou sans succès et émet le résultat (KE) respectif de la classification, **caractérisé en ce que**
le dispositif (LTE) de la technique de conduite comporte un dispositif (40) de correction, qui peut modifier la courbe de freinage de consigne en fonction des résultats (KE) présents de la classification.

2. Dispositif (LTE) de la technique de conduite suivant la revendication 1,
**caractérisé en ce que**
le dispositif (40) de correction prend en compte le résultat (KE) de la classification dans le cas d'une opération de freinage classée comme sans succès exclusivement, s'il y a pour cela un signal (FS) de validation de la part du conducteur.

3. Dispositif (LTE) de la technique de conduite suivant l'une des revendications précédentes,
**caractérisée en ce que**
le dispositif (LTE) de la technique de conduite peut, en fonction de résultats (KE) présents de la classification, modifier en fonction de l'emplacement la courbe de freinage de consigne, donc seulement en ce qui concerne les tronçons de voie auxquels se rapportent les résultats (KE) de la classification.

4. Dispositif (LTE) de la technique de conduite suivant l'une des revendications précédentes,
**caractérisé en ce que**
- le dispositif (LTE) de la technique de conduite peut, pour le freinage du véhicule, tirer parti d'au moins deux courbes de freinage de consigne, dont l'une n'est pas critique du point de vue de la sécurité et est désignée dans ce qui suit par courbe (VBK) de freinage complet, et une courbe de freinage de consigne haute du point de vue de la vitesse, critique du point du vue de la sécurité et donc non modifiable, désignée dans ce qui suit par courbe (SBK) de freinage rapide,
- la courbe (VBK) de freinage complet est mise à profit par le dispositif (LTE) de la technique de conduite pour le freinage du véhicule, dès que la vitesse (V) du véhicule atteint ou dépasse la vitesse (V) définie par la courbe (VBK) de frein complet,
- la courbe (SBK) de frein rapide est mise à profit par le dispositif (LTE) de la technique de conduite pour le freinage du véhicule, dès que la vitesse (V) du véhicule, non seulement dépasse la vitesse (V) définie par la courbe (VBK) de freinage complet, mais également atteint ou dépasse la vitesse (V) définie par la courbe (SBK) de freinage rapide, et
- le dispositif (30) de classification classe, après une opération de freinage, l'opération de freinage comme sans résultat, s'il a d'abord été tiré parti de la courbe (VBK) de freinage complet et ensuite de la courbe (SBK) de freinage rapide.

5. Dispositif (LTE) de la technique de conduite suivant la revendication 4,
**caractérisé en ce que**
- la courbe (VBK) de freinage complet a été calculée en tirant parti d'un ralentissement de freinage supposé, et
- le dispositif (40) de correction abaisse conformément à la vitesse la courbe (VBK) de freinage complet, après un freinage en tirant parti de la courbe (SBK) de freinage rapide, en calculant à nouveau la courbe (VBK) de freinage complet en tirant parti d'un ralentissement de freinage, qui est plus petit que le ralentissement de freinage supposé auparavant.

6. Dispositif (LTE) de la technique de conduite suivant l'une des revendications 4 et 5,
**caractérisé en ce que**
le dispositif (40) de correction élève conformément à la vitesse la courbe (VBK) de freinage complet, si un taux donné à l'avance d'opérations de freinage complet couronnées de succès a été enregistré.

7. Dispositif (LTE) de la technique de conduite suivant l'une des revendications 4 à 6,
**caractérisé en ce que**
le dispositif (40) de correction élève une courbe (WK) d'alerte se trouvant en-dessous conformément à la vitesse de la courbe (VBK) de freinage complet et/ou une courbe (MGK) de vitesse maximum se trouvant conformément à la vitesse en-dessous de la courbe (VBK) de freinage complet, si la courbe (VBK) de freinage complet est élevée et l'abaisse, si la courbe (VBK) de freinage complet est abaissée.

8. Dispositif (LTE) de la technique de conduite suivant l'une des revendications 4 à 7,
**caractérisé en ce que**
- la courbe (VBK) de freinage complet incorpore une force de freinage en générateur, qui dépend d'un énergie électrique dans une alimentation par un réseau dans un réseau (200) du côté de la voie, et
- la courbe (SBK) de freinage rapide repose exclusivement sur des dispositifs de freinage, qui sont indépendants d'une tension de réseau d'énergie électrique dans le réseau (200) du côté de la voie.

9. Dispositif (LTE) de la technique de conduite suivant l'une des revendications 4 à 8,
**caractérisé en ce que**
- la ou au moins l'une des courbes de freinage de consigne, en particulier la courbe (VBK) de freinage complet, est une courbe de freinage de consigne optimisée en usure, et
- le dispositif (30) de classification classe, après une opération de freinage suivant la courbe de freinage de consigne optimisée en usure, l'opération de freinage comme sans succès si, lors du freinage, des freins entachés d'usure ont été utilisés.

10. Dispositif (LTE) de la technique de conduite suivant la revendication 9,
**caractérisé en ce que**
le dispositif (40) de correction abaisse, conformément à la vitesse, la courbe de freinage de consigne optimisée en usure, si une opération de freinage a été classée sur sa base comme sans succès.

11. Dispositif (LTE) de la technique de conduite suivant l'une des revendications précédentes,
**caractérisé en ce que**
- le dispositif (LTE) de la technique de conduite prélève la au moins une courbe de freinage de consigne d'une base (DB) de données centrale, à laquelle les dispositifs (LTE) de la technique de conduite d'une pluralité de véhicules de même construction peuvent accéder, et
- le dispositif (40) de correction - en fonction de résultats (KE) présents de la classification de la pluralité de véhicules de même construction - modifie la courbe de freinage de consigne dans la base (DB) de données centrale avec effet pour tous les véhicules.

12. Dispositif (LTE) de la technique de conduite suivant l'une des revendications précédentes,
**caractérisé en ce que**
les courbes de frein de consigne sont des courbes de frein de consigne ETCS compatibles ETCS.

13. Procédé pour faire fonctionner un véhicule, en particulier un véhicule (100) de voie ferrée, dans lequel on freine le véhicule sur la base d'au moins une courbe de freinage de consigne, qui décrit une vitesse (V) à l'emplacement respectif du véhicule, et dans lequel, après une opération de freinage effectuée, on classe le succès de l'opération de freinage en formant un résultat (KE) de classification comme couronnée de succès ou sans succès et on émet le résultat (KE) respectif de la classification, **caractérisé en ce que**
l'on modifie la courbe de frein de consigne par un dispositif (40) de correction en fonction de résultats (KE) présents de la classification.

14. Dispositif composite composé d'un dispositif (LTE) de la technique de conduite d'un véhicule, en particulier d'un véhicule (100) de chemin de fer, et d'un dispositif (40) de correction, dans lequel le dispositif (LTE) de la technique de conduite est propre à freiner le véhicule sur la base d'au moins une courbe de freinage de consigne, qui décrit une vitesse (V) à l'emplacement respectif du véhicule,
dans lequel le dispositif (LTE) de la technique de conduite comporte un dispositif (30) de classification qui, après une opération de freinage effectuée, classe l'opération de freinage avec formation d'un résultat (KE) de classification comme couronnée de succès ou sans succès et émet le résultat (KE) respectif de classification, et
dans lequel le dispositif (40) de correction, qui est en liaison avec le dispositif (30) de classification, peut modifier la courbe de freinage de consigne, en fonction de résultats (KE) présents de classification.
